# EUROPÄISCHE PATENTSCHRIFT

(11) **EP 2 853 141 B1**
(45) Veröffentlichungstag und Bekanntmachung des Hinweises auf die Patenterteilung: **21.06.2017**
(21) Anmeldenummer: 14401093.1
(22) Anmeldetag: 11.09.2014
(51) Int. Cl.: A01C 7/04, A01C 7/10

(54) **Sämaschine**
Sowing machine
Semoir

(30) Priorität: 26.09.2013 DE 102013110641
(43) Veröffentlichungstag der Anmeldung: 01.04.2015
(73) Patentinhaber: Amazonen-Werke H. Dreyer GmbH & Co. KG, 49205 Hasbergen (DE)
(72) Erfinder: Dreyer, Justus, Dr., 49076 Osnabrück (DE); Johannaber, Stefan Jan, 49536 Lienen (DE)

(56) Entgegenhaltungen:
- EP-A2- 0 350 634
- WO-A1-2012/140349
- DE-A1-102006 038 865
- DE-A1-102010 000 237

## Beschreibung

Die Erfindung betrifft eine Sämaschine gemäß des Oberbegriffes des Patentanspruches 1.

Eine derartige Sämaschine ist in der EP 0 583 571 A1 beschrieben. Diese Sämaschine weist Dosiervorrichtungen, die in volumetrischer Weise die Samenkörner des Saatgutes aus einem Vorratsbehälter über Saatleitungen als Säscharen ausgebildeten Saatgutablageelementen zuleiten, auf. Die volumetrische Dosierung des Saatgutes hat sich bewährt, weil mit einfach ausgestalteten Dosierorganen und Regeleinrichtungen eine relativ hohe Dosiergenauigkeit für das Ausbringen des Saatgutes erreicht wird. Nachteilig ist jedoch, dass das Saatgut teilweise schubweise von den Dosiereinrichtungen den Saatleitungen zugeleitet wird und keine ausreichende Vergleichmäßigung des Saatgutstromes innerhalb der Saatleitungen bis zur Ablage der Samenkörner durch die Säschare im Boden erfolgt.

Um hier Abhilfe zu schaffen ist bei dieser Sämaschine in den Saatleitungen in der Nähe der Säschare jeweils eine als rotierend angetriebenen Rolle ausgebildete Vergleichmäßigungseinrichtung angeordnet. Mittels dieser rotierend angetriebenen Rolle soll eine Vergleichmäßigung des zugeleiteten Saatgutstromes erreicht werden. Das Saatgut gelangt unmittelbar zu der rotierend angetriebenen Rolle und wird von dieser in vergleichmäßigter Weise in die Saatfurche weitergeleitet. Nachteilig ist hier jedoch, dass nur sehr kleine Unregelmäßigkeiten in der Saatgutzuführung durch diese rotierend angetriebene Rolle ausgeglichen werden können. Die EP 0 350 634 A2 beschreibt ferner eine Drillmaschine mit einer Vergleichmäßigungsvorrichtung, welche als Rinne ausgeführt ist. Der Rinne wird das Saatgut aus einem Saatgutvorat zugeführt und kann mittels eines Antriebes in Schwingungen versetzt werden. Die Amplitude und Frequenz der Schwingung ist hierbei in Reaktion auf Sensorsignale, welche die Ausbringung des Saatgutes überwachen, steuerbar.

Der Erfindung liegt die Aufgabe zu Grunde, mit einfachen Mitteln auch größere Ungleichmäßigkeiten in dem durch eine volumetrische Dosiereinrichtung zugeführten Saatgutstrom auszugleichen und zu vergleichmäßigen, so dass die Samenkörner in vergleichmäßigter Weise im Boden abgelegt werden.

Diese Aufgabe wird in erfindungsgemäßer Weise durch den kennzeichnenden Teil des Anspruchs 1 gelöst. Infolge dieser Maßnahmen findet eine kurzzeitige Zwischenlagerung eines kleinen Saatgutvorrates unmittelbar vor der Saatgutvergleichmäßigungseinrichtung in einem Zwischenpufferbereich statt. Hierdurch findet ein Ausgleich des durch die teilweise schubweise Förderung der volumetrischen Dosierung hervorgerufenen kurzfristig zu viel oder zu wenig Saatgut in den Ablagebereich gelangenden Samenkörner statt. Die Samenkörner werden in vergleichmäßigter und/oder gleichmäßiger Weise im Boden abgelegt. Durch die Füllstandsmesseinrichtung und der hierauf beruhenden Regelung der Drehzahl der Saatgutvergleichmäßigungseinrichtung wird immer ein ausreichender Vorrat von Samenkörner im Zwischenpufferbereich vorgehalten, damit ein entsprechender Ausgleich der zu viel oder zu wenig in Richtung des Schares sich bewegenden Samenkörner durch die Saatgutvergleichmäßigungseinrichtung zur Ablage der Samenkörner in möglichst gleichmäßigen Abständen zueinander im Boden erreicht wird. Damit ein optimierter Vorrat an Samenkörner im Zwischenpufferbereich vorhanden ist, so dass weder zu viel noch zu wenig Samenkörner zur Vergleichmäßigung vorgehalten werden, ist vorgesehen, dass durch die von der Füllstandsmesseinrichtung an den Bordcomputer gelieferten Daten die Drehzahl der Saatgutvergleichmäßigungseinrichtung derart geregelt wird, dass der Saatgutvorrat im Zwischenpufferbereich zwischen den festgelegten Minimal- und Maximalfüllstand gehalten wird.

Eine besonders gute gleichmäßige Ablage der Samenkörner in möglichst gleichmäßigen Abständen zueinander im Boden lässt sich dadurch erreichen, dass die Saatgutvergleichmäßigungseinrichtung als Saatgutveinzelungseinrichtung ausgebildet ist.

Um eine stabile Regelung für die Ablage der Samenkörner in möglichst gleichmäßigen Abständen zueinander im Boden zu erreichen, ist vorgesehen, dass über den Borcomputer die Regelung der Drehzahl der Saatgutvergleichmäßigungseinrichtung mit einer von den Füllstandsdaten überlagerten Grundregelung durch die tatsächliche Fahrgeschwindigkeit und/oder zurückgelegten Weg der Sämaschine erfolgt.

Bei einer Sämaschine mit einer pneumatischen Förderung und Verteilung des von den auf volumetrischer Basis arbeitenden Dosierorgans dosierten Samenkörner zu und auf die einzelnen Saatleitungen, ist vorgesehen, dass von einem Dosierorgan eine pneumatisch Förderleitung zu einem den Saatgutluftstrom auf die zu den einzelnen Säscharen führenden Saatleitungen aufteilenden Verteilerkopf führt, dass die Saatgutvergleichmäßigungseinrichtungen als mit einer Druckdifferenz beaufschlagbare Öffnungen aufweisende Vereinzelungsscheibe und/oder -trommel ausgebildet sind.

Um in einfacher Weise die erforderliche Druckdifferenz an den Öffnungen der Vereinzelungsscheibe zur Angleichung der Samenkörner zu schaffen, ist vorgesehen, dass die Druckdifferenz durch den Förderstrom für dieZuförderung des Saatgutes zu dem Zwischenpufferbereich erzeugbar ist.

Eine einfache drehzahlregelbare Antriebseinrichtung für die Saatgutvergleichmäßigungseinrichtung lässt sich dadurch schaffen, dass jede Saatgutvergleichmäßigungseinrichtung von einem regelbaren Elektromotor angetrieben wird.

Um die Saatgutvergleichmäßigungseinrichtung in einfacher Weiseden Säscharen der Sämaschine zuordnen zu können, ist vorgesehen, dass in den Säscharen jeweils ein Aufnahmeraum für die Anordnung der Saatgutvergleichmäßigungseinrichtung in herausnehmbarer Weise vorgesehen ist. Hierdurch ist es möglich, dass die Saatgutvergleichmäßigungseinrichtung bei entsprechend vorbereiteten oder vorgerüsteten Säscharen in einfacher Weise nachgerüstet werden kann. Außerdem kann sie jeweils bei Bedarf den Säscharen der Sämaschine zugeordnet oder wieder von ihnen entfernt werden.

Um die Saatgutvergleichmäßigungseinrichtung in einfacher Weise wahlweise an den Säscharen anordnen oder von ihnen abnehmen zu können, ist vorgesehen dass die Saatgutvergleichmäßigungseinrichtung in herausnehmbarer Weise in dem Säschar angeordnet ist.

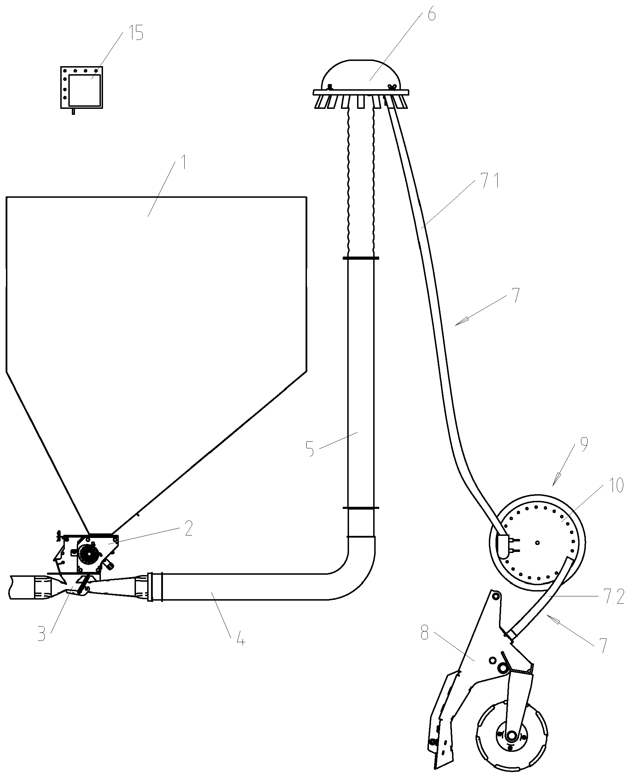

Weitere Einzelheiten der Erfindung sind der Beispielsbeschreibung zu entnehmen. Die Zeichnungen zeigen
- Fig.1: das Dosier- und Ausbringsystem einer pneumatischen Sämaschine mit der erfindungsgemäßen Saatgutvergleichmäßigungseinrichtung in Prinzipdarstellung,

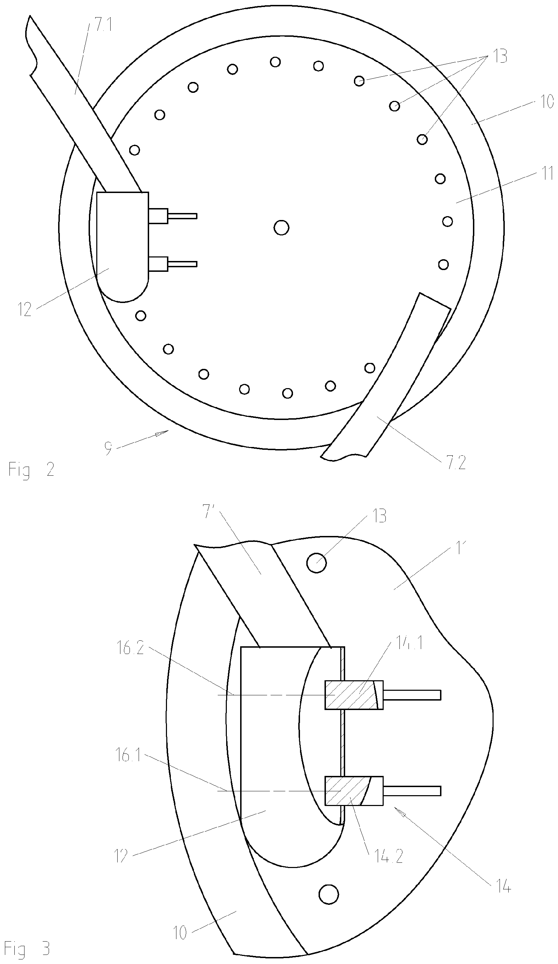

- Fig.2: Saatgutvergleichmäßigungseinrichtung in Prinzipdarstellung und vergrößertem Maßstab und
- Fig.3: der Zwischenpufferbereich der Saatgutvergleichmäßigungseinrichtung in Prinzipdarstellung und vergrößertem Maßstab.

Die Sämaschine, die schematisch wiedergegeben ist und von der nur einige Teilelemente dargestellt sind, weist in den in seinen unteren Bereich trichterförmig ausgestalteten Vorratsbehälter 1 auf. An dem unteren Auslauf des trichterförmigen Bereiches des Vorratsbehälters 1 ist das Dosierorgan 2, welches ein rotierend geschriebenes und in einem Gehäuse angeordnetes Dosierrad oder Dosiergehäuse aufweist, angeordnet. Unterhalb des Dosierorgans 2 ist eine Schleuse 3 einer mit Druckluft beaufschlagten Förderleitung 4 angeordnet. In den Förderluftstrom dieser Leitung 4 speist das Dosierorgan 2 in Art einer um Volumendosierung das auszubringende Saatgut in einstellbaren Mengen ein. Über den Förderluftstrom wird das der Förderleitung 4 zudosierte Saatgut einem Steigrohr 5 zugeleitet, an dessen oberen Ende der Verteilerkopf 6 angeordnet ist. Von diesem Verteilerkopf 6 gehen mehrere Anschlüsse für Saatgutleitungen 7 ab. Über den Verteilerkopf 6 werden die Samenkörner des zugeführten Saatgutes in gleichmäßiger Weise auf die einzelnen Saatgutleitungen 7 aufgeteilt. Diese Saatgutleitungen 7 führen zu an einem einem Rahmen der Sämaschine angeordneten Säscharen 8. Über diese Säschare 8 wird das Saatgut in von den Säscharen 8 in den Boden gerissenen Folien abgelegt.

In den Saatleitungen 7 ist in jeweils im Bereich der Säschare 8 eine Saatgutvergleichmäßigungeinrichtung 9 angeordnet. Diese Saatgutvergleichmäßigungeinrichtung 9 weist ein Gehäuse 10 auf. Dieses Gehäuse 10 ist mittels geeigneter Mitteln an den Säscharen 8 oder deren Halterung befestigt. In dem Gehäuse 10 der Saatgutvergleichmäßigungeinrichtung 9 ist ein rotierendes Vergleichmäßigungselement 11, welches von einem in seiner Drehzahl regelbaren Elektromotor angetrieben wird. Weiterhin ist in dem Gehäuse 10 ein Zwischenpufferbereich 12 angeordnet, in der von dem Verteilerkopf 6 kommenden Saatleitung 7.1 einmündet. Weiterhin ist an dem Gehäuse 10 eine weiterführende zu dem Säschar 8 führende Saatgutleitung 7.2 angeordnet.

In nicht dargestellter Weise kann das Säschar 8 einen Aufnahmeraum für die Anordnung der Saatgutvergleichmäßigungeinrichtung 9 aufweisen. In diesen Aufnahmeraum kann dann die Saatgutvergleichmäßigungeinrichtung 9 in herausnehmbare Weise angeordnet werden.

Im Ausführungsbeispiel ist das Vergleichmäßigungselement als rotierende Vereinzelungsscheibe 11 ausgebildet, in deren Randbereich mit einer Druckdifferenz beaufschlagbare Öffnungen 13 angeordnet sind. Im Ausführungsbeispiel wird die Druckdifferenz durch den Luftförderstrom für die Zuführung des Saatgutes zu den Zwischenpufferbereich 12 erzeugt. Somit haften die sich in den Zwischenpufferbereich 12 befindlichen Samenkörner, die im Bereich der Scheibe 11 an dieser anliegen, an diesen Öffnungen 13 und werden in vereinzelter Weise zu dem Anfang der von der Saatgutvergleichmäßigungeinrichtung 9 zu den Säscharen 8 führenden Saatgutleitung 7.2 mitgenommen und dort in die Saatgutleitung 7.2 übergeben, in dem mit geeigneten Mitteln wie Druckdifferenz an den Öffnungen 13 unterbrochen wird.

Dem Zwischenpufferbereich 13 sind Sensorelemente 14.1 und 14.2 einer Füllstandsmesseinrichtung 14 zugeordnet. Mittels der Füllstandsmesseinrichtung 14 wird der Füllstand von Samenkörnern des Saatgutes in dem Zwischenpufferbereich 12 ermittelt. Die Sensorelemente 14.1 und 14.2 sind über eine geeignete Datenübertragungseinrichtung mit einer als Bordcomputer 15 ausgebildeten Regeleinrichtung verbunden. Hierüber liefern in die Sensorelemente 14.1 und 14.2 der Füllstandsmesseinrichtung 14 Daten über den Füllstand von Samenkörnern in dem Zwischenpufferbereich 22 an den Bordcomputer 15. In dem Speicher des Bordcomputers 15 sind ein Minimal- 16.1 und Maximalfüllstand 16.2 für die Samenkörner des Saatgutes in den Zwischenpufferbereich 12 hinterlegt.

Weiterhin ist der Bordcomputer 15 mittels geeigneter Datenübertragungseinrichtung mit einer nicht dargestellten Wegstrecken- und/oder Geschwindigkeitsmessereinrichtung verbunden. Aufgrund in dem Speicher des Bordcomputers 15 hinterlegte Algorithmen und/oder Programme erfolgt die Regelung der Drehzahl der Saatgutvergleichmäßigungeinrichtung 9, 11 mit einer von den Füllstandsdaten überlagerten Grundregelung durch die tatsächliche Fahrgeschwindigkeit und/oder zurückgelegten Weg der Sämaschine.

Mittels den Sensorelementen 14.1 und 14.2 der Füllstandsmesseinrichtung 14 wird der jeweilige Füllstand von Samenkörner in dem Zwischenpufferbereich 12 ermittelt. Durch das in dem Speicher des Bordcomputers 15 hinterlegten Programm oder hinterlegter Algorithmen wird die Drehzahl der Saatgutvergleichmäßigungeinrichtung 9, 11 durch den Bordcomputer 15 auf ein vorgegebenes Saatgutniveau und/oder in einem vorgegebenen Saatgutfüllstandsbereich in geregelter Weise gehalten. Wenn mehr Samenkörner, als es das maximal zulässige festgelegte Saatgutniveau zulässt, in dem Zwischenpufferbereich 12 vorhanden sind, wird die Drehzahl der Vereinzelungscheibe 11 durch den Elektromotor über den Bordcomputer 15 erhöht. Wenn weniger Samenkörner, als das minimal zulässige festgelegte Saatgutniveau zulässt, in dem Zwischenpufferbereich 12 vorhanden sind, wird die Drehzahl der Vereinzelungscheibe 11 durch den Elektromotor über den Bordcomputer 15 verringert.

Durch die in Abhängigkeit der sich in den Zwischenpufferbereich 12 befindlichen Menge von Samenkörner des Saatgutes veränderte Drehzahl des Vergleichmäßigungselementes 11 der Saatgutvergleichmäßigungeinrichtung 11 wird eine Vergleichmäßigung der im Boden abgelegten Samenkörnern in ihren Abstand zueinander erreicht. Die eventuell schubweise Zuförderung der Samenkörner durch das in volumetrischer Weise dosierende Dosierorgan 2 in die Förderleitung 4 und zu den Säscharen 8 wird durch die Saatgutvergleichmäßigungeinrichtung 9 somit aufgelöst und eine Ablage der Samenkörner im vergleichmäßigten Abständen zueinander erreicht.

## Patentansprüche

1. Sämaschine mit einem Vorratsbehälter (1), der in seinem unteren Bereich zumindest ein Dosierorgan (2) aufweist, von dem aus das auszubringende Saatgut über Saatleitungen (7) Säscharen zuführbar ist, wobei den Säscharen (8) jeweils eine mit veränderbaren Drehzahlen, die über eine Regeleinrichtung (15) einstellbar sind, rotierend angetriebene Saatgutvergleichmäßigungseinrichtung (9, 11) mit einem Zwischenpufferbereich (12) zugeordnet ist, wobei in dem Zwischenpufferbereich (12) eine mit der als Bordcomputer (15) ausgebildeten Regeleinrichtung über eine Datenübertragungseinrichtung verbundene Füllstandsmesseinrichtung (14, 14.1, 14.2) angeordnet ist, wobei in Abhängigkeit der von der Füllstandsmesseinrichtung (14, 14.1, 14.2) ermittelten Füllstandsdaten die Drehzahl der Saatgutvergleichmäßigungseinrichtung (9, 11) durch den Bordcomputer auf ein vorgegebenes Saatgutniveau und/oder in einem -bereich geregelt wird, **dadurch gekennzeichnet, dass** durch die von der Füllstandsmesseinrichtung (14, 14.1, 14.2) an den Bordcomputer (15) gelieferten Daten die Drehzahl der Saatgutvergleichmäßigungseinrichtung (9,11) derart geregelt wird, dass der Saatgutvorrat im Zwischenpufferbereich (12) zwischen den festgelegten Minimal- und Maximalfüllstand (16.1, 16.2) gehalten wird.

2. Sämaschine nach Anspruch 1, **dadurch gekennzeichnet, dass** die Saatgutvergleichmäßigungseinrichtung (9) als Saatgutvereinzelungseinrichtung (11) ausgebildet ist.

3. Sämaschine nach zumindest einem der vorstehenden Ansprüche, **dadurch gekennzeichnet, dass** über den Borcomputer (15) die Regelung der Drehzahl der Saatgutvergleichmäßigungseinrichtung (9, 11) mit einer von den Füllstandsdaten überlagerten Grundregelung durch die tatsächliche Fahrgeschwindigkeit und/oder zurückgelegten Weg der Sämaschine erfolgt.

4. Sämaschine nach zumindest einem der vorstehenden Ansprüche, **dadurch gekennzeichnet, dass** von einem Dosierorgan (2) eine pneumatisch Förderleitung (4, 5) zu einem den Saatgutluftstrom auf die zu den einzelnen Säscharen (8) führenden Saatleitungen (7) aufteilenden Verteilerkopf (6) führt, dass die Saatgutvergleichmäßigungseinrichtungen (9) als mit einer Druckdifferenz beaufschlagbare Öffnungen (13) aufweisende Vereinzelungsscheibe (11) und/oder -trommel ausgebildet sind.

5. Sämaschine nach Anspruch 4, **dadurch gekennzeichnet, dass** die Druckdifferenz durch den Förderstrom für die Zuförderung des Saatgutes zu dem Zwischenpufferbereich (12) erzeugbar ist.

6. Sämaschine nach zumindest einem der vorstehenden Ansprüche, **dadurch gekennzeichnet, dass** jede Saatgutvergleichmäßigungseinrichtung (9, 11) von einem regelbaren Elektromotor angetrieben wird.

7. Sämaschine nach zumindest einem der vorstehenden Ansprüche, **dadurch gekennzeichnet, dass** in den Säscharen (8) jeweils ein Aufnahmeraum für die Anordnung der Saatgutvergleichmäßigungseinrichtung (9) in herausnehmbarer Weise vorgesehen ist.

8. Sämaschine nach zumindest einem der vorstehenden Ansprüche, **dadurch gekennzeichnet, dass** die Saatgutvergleichmäßigungseinrichtung in herausnehmbarer Weise in dem Säschar angeordnet ist.

## Claims

1. Seed drill having a storage container (1) which has, in its lower region, at least one metering member (2) from which the seed to be dispensed is able to be fed via seed lines (7) to sowing coulters, wherein the sowing coulters (8) are each assigned a seed homogenizing device (9, 11) that is driven in rotation at variable speeds, which are settable via a regulating device (15), and has an intermediate storage region (12), wherein a filling level measuring device (14, 14.1, 14.2) that is connected to the regulating device, configured as an on-board computer (15), via a data transmission device is arranged in the intermediate storage region (12), wherein, depending on the filling level data determined by the filling level measuring device (14, 14.1, 14.2), the speed of the seed homogenizing device (9, 11) is regulated by the on-board computer to a predetermined seed level and/or in a region thereof, **characterized in that**, on the basis of the data delivered by the filling level measuring device (14, 14.1, 14.2) to the on-board computer (15), the speed of the seed homogenizing device (9, 11) is regulated such that the stock of seed in the intermediate storage region (12) is kept between the defined minimum and maximum filling level (16.1, 16.2).

2. Seed drill according to Claim 1, **characterized in that** the seed homogenizing device (9) is configured as a seed singling device (11).

3. Seed drill according to at least one of the preceding claims, **characterized in that**, via the on-board computer (15), the speed of the seed homogenizing device (9, 11) is regulated with a basic regulation, overlaid with the filling level data, by the actual speed of travel and/or the path that the seed drill has covered.

4. Seed drill according to at least one of the preceding claims, **characterized in that** a pneumatic delivery line (4, 5) leads from a metering member (2) to a distribution head (6) that apportions the seed air stream to the seed lines (7) leading to the individual sowing coulters (8), and **in that** the seed homogenizing devices (9) are configured as singling discs (11) and/or drums having openings (13) that are able to be subjected to a pressure difference.

5. Seed drill according to Claim 4, **characterized in that** the pressure difference is able to be generated by the delivery stream for delivering the seed to the intermediate storage region (12).

6. Seed drill according to at least one of the preceding claims, **characterized in that** each seed homogenizing device (9, 11) is driven by a regulatable electric motor.

7. Seed drill according to at least one of the preceding claims, **characterized in that** a receiving space for arranging the seed homogenizing device (9) in a removable manner is provided in each of the sowing coulters (8).

8. Seed drill according to at least one of the preceding claims, **characterized in that** the seed homogenizing device is arranged in a removable manner in the sowing coulter.

## Revendications

1. Semoir, comprenant un réservoir (1) qui possède dans sa zone inférieure au moins un organe de dosage (2) depuis lequel le produit à semer peut être acheminé à des socs de semoir par le biais de conduites à semence (7), un dispositif d'homogénéisation de produit à semer (9, 11) doté d'une zone tampon intermédiaire (12) et entraîné en rotation avec des vitesses de rotation variables, lesquelles sont réglables par le biais d'un dispositif de régulation (15), étant respectivement associé les socs de semoir (8), un dispositif de mesure de niveau de remplissage (14, 14.1, 14.2), relié au dispositif de régulation réalisé sous la forme d'un ordinateur de bord (15), étant disposé dans la zone tampon intermédiaire (12), la vitesse de rotation du dispositif d'homogénéisation de produit à semer (9, 11) étant régulée en fonction des données de niveau de remplissage déterminées par le dispositif de mesure de niveau de remplissage (14, 14.1, 14.2) par l'ordinateur de bord à un niveau et/ou dans une plage de produit à semer prédéfini(e), **caractérisé en ce que** la vitesse de rotation du dispositif d'homogénéisation de produit à semer (9, 11) est régulée par les données délivrées à l'ordinateur de bord (15) par le dispositif de mesure de niveau de remplissage (14, 14.1, 14.2) de telle sorte que la réserve de produit à semer dans la zone tampon intermédiaire (12) est maintenue entre le niveau de remplissage minimum et maximum (16.1, 16.2) défini.

2. Semoir selon la revendication 1, **caractérisé en ce que** le dispositif d'homogénéisation de produit à semer (9) est réalisé sous la forme d'un dispositif de séparation de produit à semer (11).

3. Semoir selon au moins l'une des revendications précédentes, **caractérisé en ce que** l'ordinateur de bord (15) effectue la régulation de la vitesse de rotation du dispositif d'homogénéisation de produit à semer (9, 11) avec une régulation de base à laquelle sont superposées les données de niveau de remplissage par le biais de la vitesse de déplacement effective et/ou du trajet parcouru du semoir.

4. Semoir selon au moins l'une des revendications précédentes, **caractérisé en ce qu'**une conduite de transport (4, 5) mène d'un organe de dosage (2) à une tête de distribution (6) distribuant le flux d'air de produit à semer sur les conduites à semence (7) menant vers les socs de semoir (8) individuels, **en ce que** les dispositifs d'homogénéisation de produit à semer (9) sont réalisés sous la forme d'un disque et/ou d'un tambour de séparation (11) qui possède des ouvertures (13) pouvant être exposées à une différence de pression.

5. Semoir selon la revendication 4, **caractérisé en ce que** la différence de pression peut être générée par le courant de transport pour l'acheminement du produit à semer à la zone tampon intermédiaire (12).

6. Semoir selon au moins l'une des revendications précédentes, **caractérisé en ce que** chaque dispositif d'homogénéisation de produit à semer (9, 11) est entraîné par un moteur qui peut être régulé.

7. Semoir selon au moins l'une des revendications précédentes, **caractérisé en ce que** dans les socs de semoir (8) se trouve à chaque fois un espace d'accueil pour y arranger le dispositif d'homogénéisation de produit à semer (9) de manière à ce qu'il puisse en être sorti.

8. Semoir selon au moins l'une des revendications précédentes, **caractérisé en ce que** le dispositif d'homogénéisation de produit à semer est disposé dans le soc de semoir de manière à pouvoir en être sorti.
